# EUROPEAN PATENT APPLICATION

(11) **EP 3 138 684 A1**
(43) Date of publication of application: **08.03.2017**
(21) Application number: 15786113.9
(22) Date of filing: 28.04.2015
(51) Int. Cl.: B29C 63/32, F16L 1/00, F16L 55/18

(54) **TUBE-MAKING DEVICE AND TUBE-MAKING METHOD USING SAME**

(30) Priority: 30.04.2014 JP 2014093484
(71) Applicant: Sekisui Chemical Co., Ltd., Osaka-shi, Osaka 530-8565 (JP)
(72) Inventor: YAMASAKI, Masahiro, Shiga 520-3027 (JP); YOSHINO, Katsunori, Shiga 520-3027 (JP); SUGIYAMA, Yoshirou, Shiga 520-3027 (JP); YOSHIMINE, Shouta, Shiga 520-3027 (JP)
(74) Representative: Hoffmann Eitle
(86) International application number: PCT/JP2015/062833
(87) International publication number: WO 2015/166948

(57) **Abstract**

A winding machine (1) includes at least: a plurality of orbiting elements (20); a spring mechanism (8) coupling the plurality of orbiting elements (20); and a joining mechanism (5) for a profile strip (100). The winding machine (1) is installed inside an existing pipe (90), and the profile strip (100) is fed to the joining mechanism (5) from an inner circumference side of the winding machine (1). The profile strip (100) thus fed is transferred to an outer circumference of the winding machine (1) and spirally orbited while being pushed radially outward, so as to form a pipe of the profile strip (100). While the pipe (10) is being formed, an outer diameter of the winding machine (1) is increased or decreased using the spring mechanism (8) in accordance with an internal shape of the existing pipe (1) so as to increase or decrease a diameter of the pipe (10).

## Description

### Technical Field

The present invention relates to winding machines forming rehabilitating pipes and also to winding methods using such machines.

### Background Art

Construction methods where the inner face of an existing pipe is lined with a rehabilitating pipe made of synthetic resin are in practical use as a solution to the aging of pipe channels, such as agricultural water pipes, sewage pipes, water supply pipes, and gas pipes. For example, an elongate strip-shaped lining material (profile strip) is spirally wound on the inner face of an existing pipe so that adjacent side edges are joined with one on top of the other to form a rehabilitating pipe in the lengthwise direction of the existing pipe.

For example, Patent Document 1 describes a winding machine that orbits spirally while twining a profile strip on an outer circumference, so as to form a pipe of the profile strip. This winding machine includes a bending link that increases or decreases the diameter of a shaping frame, a drive unit that feeds a profile strip, and a joining unit disposed on a fit portion of the wound profile strip.

### Citation List

### Patent Document

Patent Document 1: WO 2008/075681 A

### Summary of Invention

### Technical Problem

If the existing pipe varies greatly in the shape of the inner face thereof, the front end of the rehabilitating pipe formed by the aforementioned winding machine may be stuck on, for example, irregularities and steps on the inner face. Therefore, the pipe forming work needs to be continuously monitored. If the front end portion of the rehabilitating pipe or the winding machine moves into contact with, for example, a step in the existing pipe, the work needs to be temporarily discontinued. A worker then needs to enter the existing pipe and manually operate the bending link to adjust the winding machine in accordance with the shape of the inner face of the existing pipe. Subsequently, if the inner diameter of the existing pipe changes, the work needs to be discontinued again, and the worker needs to manually operate the bending link to manually adjust the winding machine.

As described above, the conventional winding machine allows an outer diameter thereof to be uniformly changed. However, every time the change is to be implemented, the work needs to be discontinued, and the worker needs to perform procedures necessary for the change inside the existing pipe. These processes could decrease the efficiency of the pipe forming work and cause an extension of construction period.

It is an object of the present invention to achieve a configuration in which a winding machine can deform in accordance with a changing shape of an inner face of an existing pipe and increase or decrease a diameter of a front end portion of a pipe being formed without requiring a manual diameter-increasing/decreasing adjustment job every time, in order to eliminate the conventional need to discontinue a pipe forming work and thereby allow for improvement in efficiency of the pipe forming work.

### Solution to Problem

To solve these issues, the present invention is directed to a winding machine spirally winding an elongate profile strip to form a rehabilitating pipe. The winding machine has a main body including: a plurality of orbiting elements; at least one spring mechanism configured to couple the plurality of orbiting elements at a distance from each other and to be stretched and compressed between the plurality of orbiting elements; and a joining mechanism supported by the plurality of orbiting elements, the joining mechanism being configured to push a fit portion of the profile strip against a preceding fit portion of the profile strip from inside a spiral to join the two fit portions. The main body is formed in a ring-like shape. The at least one spring mechanism, including at least one spring element, is configured to be capable of being stretched and compressed so that the plurality of orbiting elements are mutually separated by a distance varying along an axial direction of the main body. The winding machine, when the at least one spring mechanism is stretched and compressed under an external force, forms the rehabilitating pipe while the main body is being deformed in such a manner as to have different circumferential lengths on one end and another in terms of the axial direction.

The winding machine in accordance with the present invention may be such that: the at least one spring mechanism, including at least one spring element, is configured to be capable of being stretched and compressed so that the plurality of orbiting elements are moved away from each other or closer to each other in a circumferential direction of the main body; the main body further includes an element configured to stretch or compress the at least one spring element in the at least one spring mechanism to regulate a stretching and compression range of the at least one spring mechanism; and the winding machine, when the at least one spring mechanism is stretched and compressed, forms the pipe while the main body is changing an outline thereof.

This winding machine is capable of increasing or decreasing an outer diameter of the pipe being formed in accordance with a change in the internal shape of the existing pipe. This capability reduces the need to stop the winding machine and perform procedures to adjust each element/unit/mechanism every time the internal shape of the existing pipe changes. The rehabilitating pipe can be formed efficiently in a short period.

A winding method of forming a rehabilitating pipe using this winding machine is also within the technical concept of the present invention. Specifically, the winding method involves: installing, in an existing pipe, the winding machine having a diameter thereof increased or decreased by the aforementioned at least one spring mechanism; feeding an elongate profile strip to the aforementioned joining mechanism from an inner circumference side of the winding machine; transferring the profile strip thus fed, to an outer circumference of the winding machine and spirally orbiting the profile strip while pushing the profile strip radially outward, so as to form a pipe of the profile strip; and while forming this pipe, changing a shape of the winding machine in accordance with an internal shape of the existing pipe so as to increase or decrease a diameter of the pipe being formed.

This method enables a pipe to be formed while increasing or decreasing a diameter of the pipe at a front end portion of the pipe in accordance with a changing internal shape of an existing pipe. The pipe thus formed is less likely to be stuck on even large irregularities and steps on the inner face of the existing pipe. The pipe forming work can proceed smoothly. The method also eliminates the need to discontinue the pipe forming work every time the shape of the winding machine is to be changed. Hence, work efficiency improves.

### Advantageous Effects of Invention

In the present invention, the main body of a winding machine is configured to be deformed under an external force. Therefore, the shape of the main body can be deformed in accordance with the internal shape of an existing pipe, so that a pipe of a profile strip can be formed while increasing or decreasing the diameter of the pipe. Work efficiency hence greatly improves.

### Brief Description of Drawings

Fig. 1 is a front view of a winding machine in accordance with Embodiment 1.
Figs. 2(a) and 2(b) show a linking body for the winding machine in enlarged views, Fig. 2(a) being a front view and Fig. 2(b) being a plan view with a partial cross-section.
Fig. 3 is a partially cut-away side view of a drive unit for the winding machine.
Fig. 4 is a plan view of the drive unit and a fit roller as they are viewed from an inner circumference side of a main body of the winding machine.
Figs. 5(a) and 5(b) show a spring mechanism for the winding machine, Fig. 5(a) being a front view and Fig. 5(b) being a plan view as the spring mechanism is viewed from the inner circumference side of the main body of the winding machine.
Fig. 6 is a plan view of the spring mechanism being obliquely displaced.
Figs. 7(a) and 7(b) are a schematic view of an exemplary profile strip.
Fig. 8 is an illustration of how a rehabilitating pipe is formed.
Fig. 9 is an illustration of the spring mechanism for the winding machine, the spring mechanism being deformed.
Figs. 10(a) and 10(b) illustrate, by way of heightwise cross-section of an existing pipe, the winding machine being deformed.
Fig. 11 illustrates, by way of widthwise cross-section of the existing pipe, the winding machine being deformed.
Fig. 12 is a plan view of a spring mechanism for a winding machine in accordance with Embodiment 2.
Fig. 13 is a plan view of a spring mechanism for a winding machine in accordance with Embodiment 3.
Fig. 14 is a plan view of the spring mechanism for the winding machine in accordance with Embodiment 3 as it is viewed from an outer circumference side of a main body of the winding machine.
Fig. 15 is a side view of a restricting element or a compressing element for a winding machine as another example.
Fig. 16 is a side view of a restricting element or a compressing element for a winding machine as a further example.

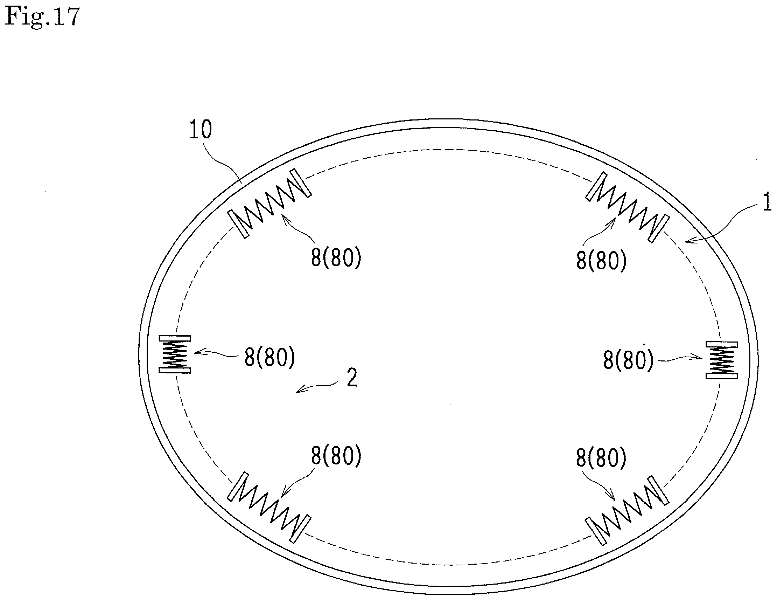

Fig. 17 is an illustration of a variation example of the winding machine that operates by means of spring mechanisms exhibiting different stretching and compression amounts.

### Description of Embodiments

Embodiments of the present invention will now be described in reference to drawings. The following will describe an application example of the present invention in which a profile strip 100 made of synthetic resin is used to rehabilitate an existing pipe such as an underground sewage pipe.

### Embodiment 1

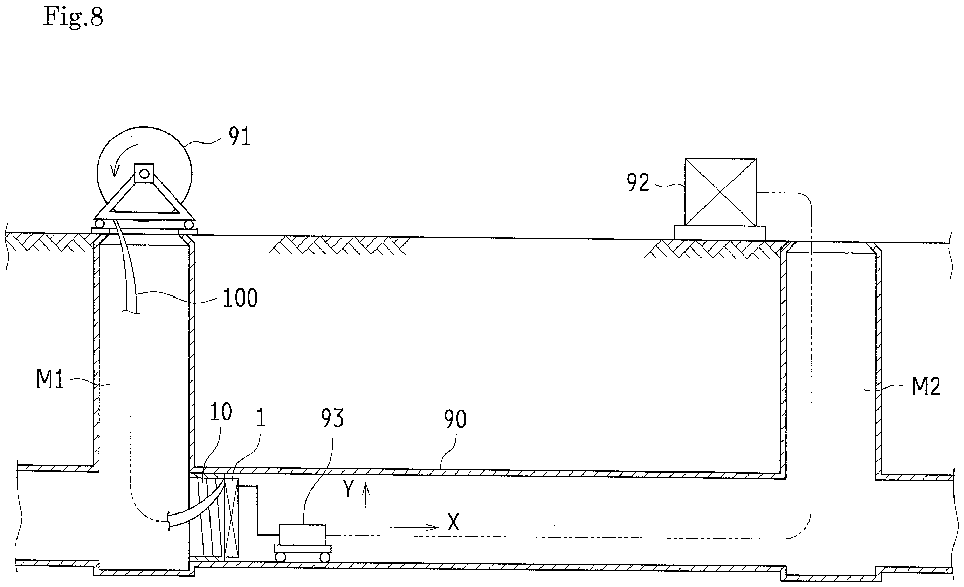

A winding machine 1 in accordance with Embodiment 1 continuously pulls the profile strip 100 into an existing pipe 90 and spirally winds the profile strip 100 to form a pipe 10 (rehabilitating pipe). The winding machine 1 moves forward in a winding direction X (see Fig. 8), that is, an axial direction of the winding machine 1, while rotating in a circumferential direction on the inner face of the existing pipe 90.

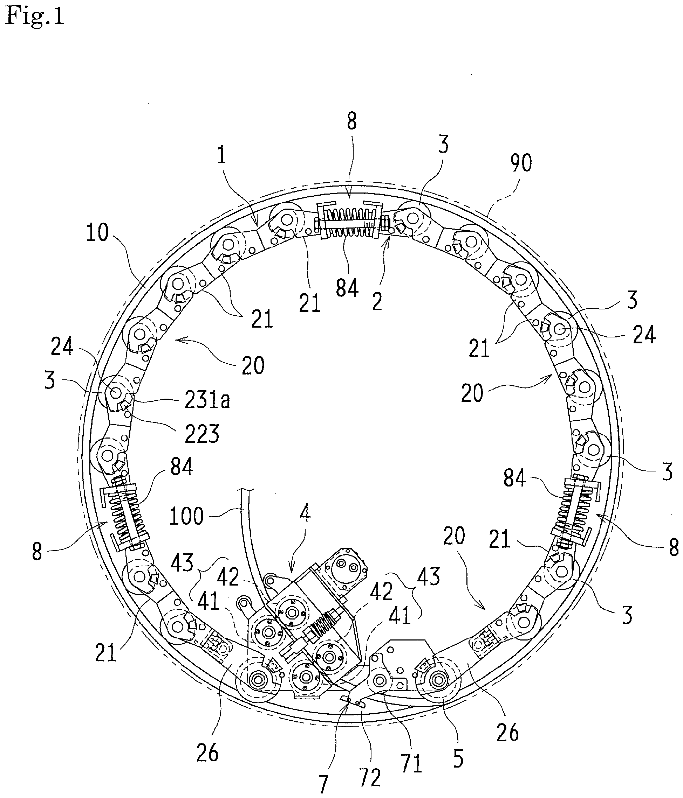

As illustrated in Fig. 1, a main body 2 of the winding machine 1 includes a plurality of orbiting elements 20, a drive unit 4 (drive mechanism) pulling in the profile strip 100 and supplying the profile strip 100 to the main body 2 from an inner circumference side of the main body 2, and a fit roller 5 (joining mechanism) for pressing a side edge of the profile strip 100 from an inner circumference side of the profile strip 100 to fit in. The main body 2 has a ring-like shape.

Each orbiting element 20 includes a linking body 21 provided with a linking roller 3. The linking bodies 21 are coupled together to form a chain of them. The linking rollers 3 are disposed at intervals in the circumferential direction. The end portions of the chain of the linking bodies 21 of the orbiting elements 20 are coupled via the drive unit 4, the fit roller 5, and other elements so that the main body 2 as a whole can be shaped like a ring.

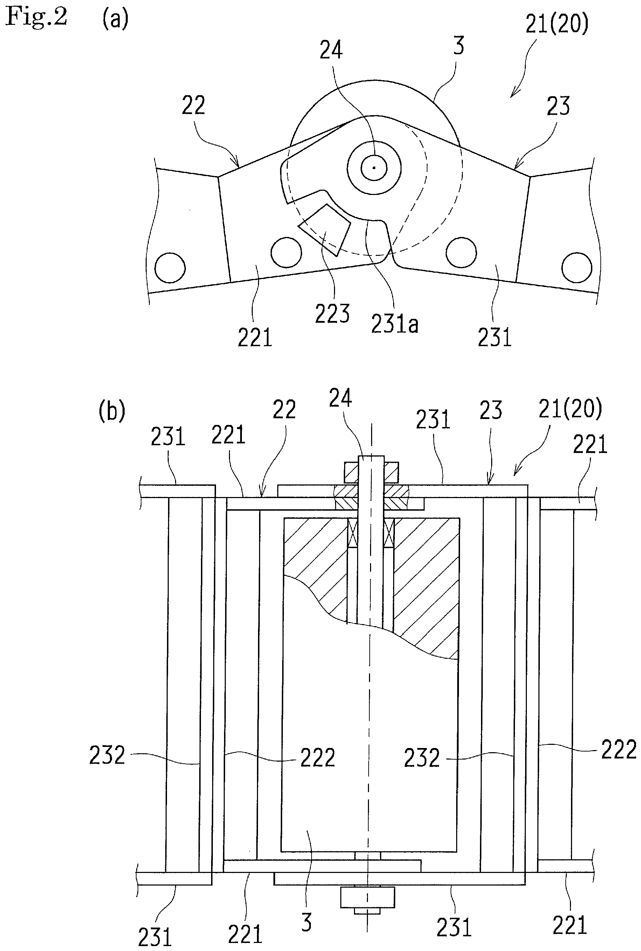

Each linking body 21, as illustrated in Fig. 2(b), includes a pair of linking elements 22 and 23 and a coupling shaft 24 rotatably coupling these linking elements 22 and 23. Each linking element 22 (23) has sidewall portions 221 (231) coupled by a coupling wall portion 222 (232). Thus, the linking elements 22 and 23 are attached to each other, forming a rectangular shape. The sidewall portions 221 of one of the linking elements (the linking element 22) are flanked externally by the sidewall portions 231 of the other linking element 23, with the sidewall portions 221 and 231 being coupled by the coupling shaft 24 running through the sidewall portions 221 and 231. The linking elements 22 and 23 are thus rotatable relative to each other.

As illustrated in Fig. 2(a), at an end portion of the linking element 23, each sidewall portion 231 has a notch portion 231 a formed throughout a predetermined range of angle around the coupling shaft 24. There is provided a rotation regulating piece 223 on each sidewall portion 221 of the linking element 22 so that the rotation regulating piece 223 can fit into the notch portion 231 a. The range of angle in which the paired linking elements 22 and 23 can rotate relative to each other is regulated by the rotation regulating pieces 223 colliding with the ends of the notch portions 231 a. In the illustrated configuration, the linking elements 22 and 23 make an angle of about 100° or greater with each other when the linking elements 22 and 23 are bent relative to each other. Thus, the orbiting elements 20 form a curved shape on the curved inner face of the existing pipe 90. The orbiting elements 20 orbit in contact with the profile strip 100 so as to maintain the ring-like shape of the main body 2.

The coupling shaft 24 doubles as a support shaft for the linking roller 3. The coupling shaft 24 rotatably supports the linking roller 3 via bearings. The linking rollers 3 are, for example, synthetic resin or metal cylindrical bodies and rotate in contact with a primary face of the profile strip 100 wound around an outer circumference of the main body 2.

Between an adjacent pair of the linking bodies 21 in the main body 2, the coupling wall portion 222 of one of the linking elements (the linking element 22) and the coupling wall portion 232 of the other linking element 23 are placed over each other and fastened by nuts and bolts (not shown).

The drive unit 4 includes pairs of pinch rollers 43, each pair including an outer roller 41 and an inner roller 42. By rotating in opposite directions, these rollers 41 and 42 pinch the profile strip 100 on the primary and secondary faces thereof, pull in the profile strip 100 from the inner circumference side of the main body 2, and feed the profile strip 100 to the following fit roller 5.

In the drive unit 4, the pinch rollers 43 are provided in two pairs disposed on a supply path for the profile strip 100 as illustrated in Fig. 1. The pinch rollers 43 may be provided in a single pair.

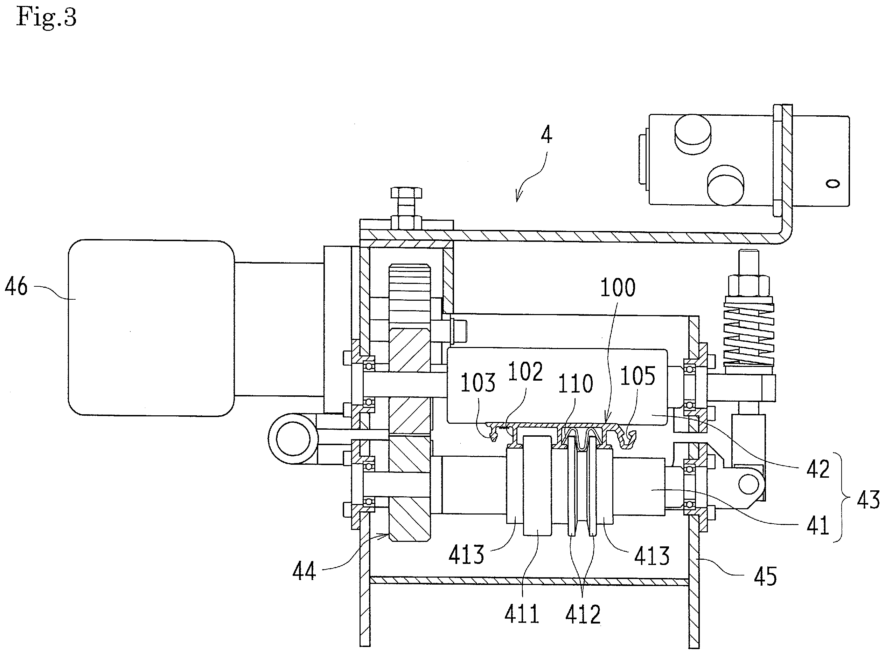

Fig. 3 shows the drive unit 4 in a partially cut-away view along a path for the profile strip 100 being pulled in by the pinch rollers 43. The pinch rollers 43 (outer roller 41 and inner roller 42) are disposed inside a casing 45 and have respective rotation shafts thereof supported rotatably by the casing 45. The inner roller 42 rotates in contact with the primary face of the profile strip 100.

The outer roller 41 is provided with large diameter portions 411 and 412 and small diameter portions 413 so as to rotate in contact with the secondary face of the profile strip 100 on which there are disposed, for example, ribs 102. The large diameter portion 411 is formed with such a width that the large diameter portion 411 can be inserted between the adjacent ribs 102 on the profile strip 100. The large diameter portions 412 are formed like collars so as to be inserted into grooves of a reinforcing element 110 attached to the profile strip 100. The small diameter portions 413 are formed so as to rotate in contact with tip ends of the ribs 102.

The outer roller 41 and the inner roller 42, receiving a driving force from a hydraulic motor 46 via a decelerator (e.g., gears in a gear mechanism 44), are driven to rotate in opposite directions. The hydraulic motor 46 operates, for example, by receiving oil pressure supplied from a hydraulic unit 93 shown in Fig. 8 via a hydraulic pipe. As the outer roller 41 and the inner roller 42 are driven to rotate, a part of the profile strip 100 is fed to an outer circumference side of the main body 2 so that the part can be placed parallel to a preceding part of the profile strip 100 that is already wound at the front end portion of the pipe 10 (see Fig. 1).

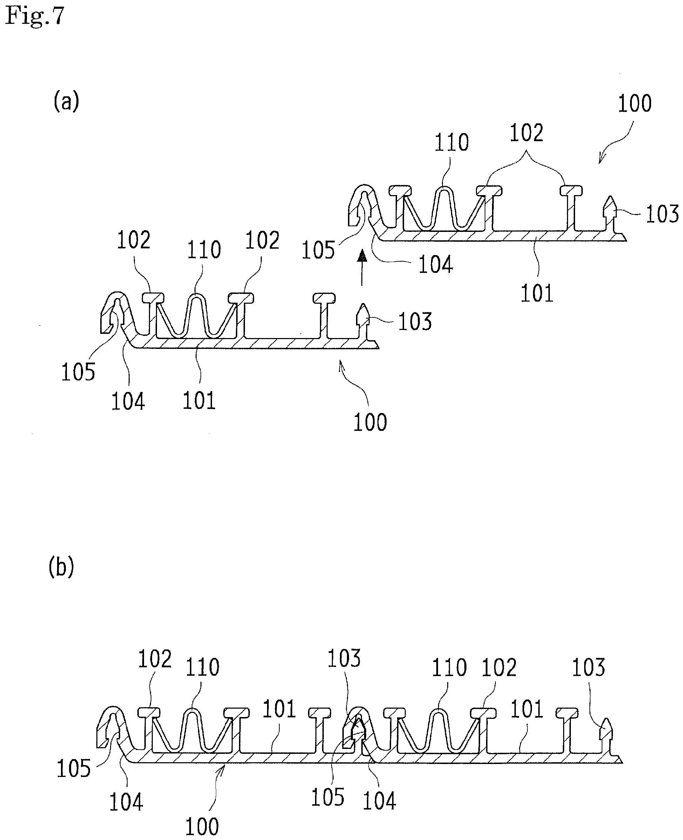

The exemplary profile strip 100 shown in Fig. 7 is shaped like an elongate strip by extrusion-molding a flexible synthetic resin, such as hard vinyl chloride, polyethylene, or polypropylene. The profile strip 100 is spirally wound on the inner face of the existing pipe 90 to form the pipe 10 (rehabilitating pipe) as illustrated in Fig. 8. The primary face of the profile strip 100 (one of the faces of the profile strip 100), forming the inner face of the pipe 10, is formed substantially flat. The secondary face of the profile strip 100 (the other face of the profile strip 100), forming the outer circumference face of the pipe 10, is provided with the ribs 102 running in a lengthwise direction of the profile strip 100 on a secondary face of a base plate 101.

The ribs 102 have a T-shaped cross-section. The reinforcing element 110, made of metal, is attached between the paired adjacent ribs 102 to extend continuously along the length of the profile strip 100. The reinforcing element 110 is formed by bending a strip-shaped steel plate in such a manner as to have a substantially W-shaped cross-section. The reinforcing element 110 has incline portions, the widthwise ends of which are caught respectively by the T-shaped tip ends of the ribs 102. No reinforcing element 110 may be attached.

Along one of side edges of the base plate 101 in terms of a width direction thereof (shown on the far left side of the drawing in Fig. 7) is there provided an open fit groove 105 extending in a lengthwise direction of the base plate 101 on the primary face of the profile strip 100 (on the bottom side of the drawing in Fig. 7). Along the same side edge of the base plate 101 is there also formed a step portion 104 that is as thick as the base plate 101.

Along the other side edge of the base plate 101 in terms of the width direction thereof (shown in the far right side of the drawing in Fig. 7) is there provided a fit protrusion 103 extending in the lengthwise direction of the base plate 101 on the secondary face of the base plate 101. The profile strip 100 is provided with the fit protrusion 103 and the fit groove 105 as fit portions. The profile strip 100 is spirally wound so that the side edges thereof, placed adjacent to each other, can be joined together.

The profile strip 100 is reeled out from a drum 91 and continuously supplied to the winding machine 1 as illustrated in Fig. 8. The profile strip 100 is supplied to the winding machine 1 so that the secondary face of the base plate 101, on which the ribs 102 and other elements are erected, forms the outer circumference side thereof. The profile strip 100 is placed so that the side edges thereof are adjacent to each other. The fit protrusion 103 is inserted into the fit groove 105 from the inner circumference side.

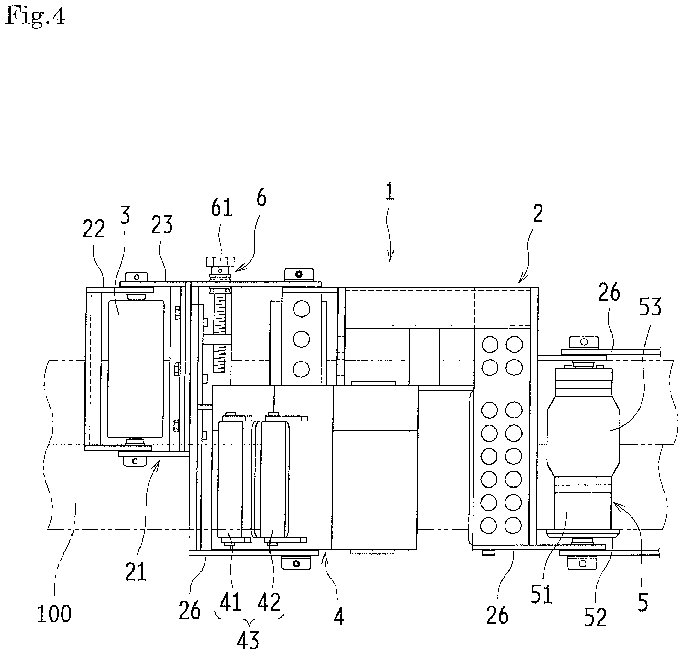

The winding machine 1 is provided with the single fit roller 5 as a joining mechanism. Fig. 4 shows the drive unit 4 and the fit roller 5 as they are viewed from the inner circumference side of the profile strip 100. Relating to the drive unit 4, the hydraulic motor 46 and the hydraulic pipe are not shown. The fit roller 5 is disposed on the ring-shaped main body 2 and located on an inner circumference side of the pipe 10. The winding machine 1 is structured so that no roller or similar elements other than the fit roller 5 are needed as joining mechanisms on an outer circumference side of the pipe 10.

The fit roller 5 has a shaft supported between a pair of plates 26 that form a linking body for coupling. The fit roller 5 is provided with a cylindrical main body 51 having substantially the same diameter as the linking roller 3 and a collar 52 and a large diameter portion 53 that have a larger diameter than the linking roller 3.

The fit roller 5 is in contact with the primary face of the profile strip 100 wound at the front end portion of the pipe 10 having been formed. The fit roller 5 places the side edge of the part of the profile strip 100 fed from the drive unit 4 over the side edge of the wound part of the profile strip 100 and joins the side edges together. During the placing and joining, the collar 52 on the fit roller 5 is in contact with the side edge of the profile strip 100 for guiding thereof, and the large diameter portion 53 firmly presses the side edge of the profile strip 100 from the inner circumference side so as to fit the fit protrusion 103 into the fit groove 105.

There is provided an adjustment mechanism 6 near the drive unit 4. The adjustment mechanism 6 adjusts the spiral path of the profile strip 100 so that the profile strip 100 can be wound at a predetermined pitch. The adjustment mechanism 6 is arranged to enable the path of the profile strip 100 to be adjusted by rotating an adjusting screw 61 to adjust the position of the linking roller 3.

Between the drive unit 4 and the fit roller 5, there is provided an outer face guide 7 that guides the profile strip 100 so as to prevent the profile strip 100 from being displaced toward the outer circumference side (see Fig. 1). The outer face guide 7 includes a guide roller 71 and a guide plate 72. The guide roller 71 has a small diameter and is in contact with the primary face of the profile strip 100 for guiding thereof. The guide plate 72 is disposed closer to the outer circumference of the main body 2 than is the part of the profile strip 100 that is to be guided by the guide roller 71 and fed to the fit roller 5.

The main body 2 includes spring mechanisms 8 disposed in a plurality of locations (e.g., three or more locations) at predetermined intervals in the circumferential direction. Each spring mechanism 8 couples the adjacent linking bodies 21 (orbiting elements 20) together in such a manner that the distances separating the adjacent linking bodies 21 can be increased and decreased.

### Spring Mechanism

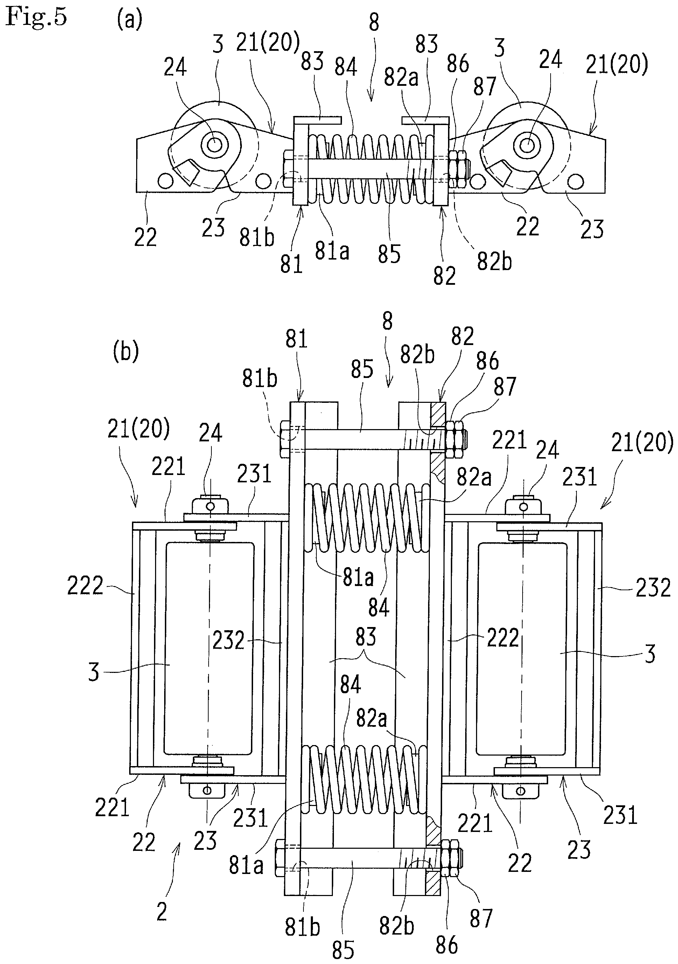

As illustrated in Figs. 5(a) and 5(b), the spring mechanism 8 is disposed between the linking bodies 21 that are components of the orbiting elements 20. The spring mechanism 8 has a securing plate 81 (shown in the left side of the figures) placed over, and fastened to, the coupling wall portion 232 of the linking element 23. The spring mechanism 8 also has a securing plate 82 (shown in the right side of the figures) fastened to the coupling wall portion 222 of the linking element 22.

The securing plates 81 and 82 are each formed from a thick steel plate shaped like a rectangular strip. The securing plate 81 (82) has an extension plate 83 formed along a lengthwise side thereof to extend toward the other securing plate 82 (81). As illustrated in Fig. 5(a), the securing plates 81 and 82 have a reverse L-shape as a whole when viewed from the front. The securing plate 81 (82) has a pair of boss portions 81a (82a), separated by a distance from each other, close to the lengthwise middle of the securing plate 81 (82). The end portions of coil springs (spring elements) 84 are inserted respectively into the boss portions 81a and 82a.

As illustrated in Fig. 5(b), the two coil springs 84 are suspended between these paired securing plates 81 and 82. Each coil spring 84 has an end portion thereof inserted into the corresponding boss portion 81 a of the securing plate 81 and another end portion thereof inserted into the corresponding boss portion 82a of the securing plate 82. The securing plates 81 and 82 can be displaced relative to each other as a result of deformation of the two coil springs 84. Thus, the distance that separates the adjacent linking bodies 21 can change, which ensures the freedom of the relative displacement of the linking bodies 21.

The paired securing plates 81 and 82 respectively have circular holes 81b and 82b formed therethrough in a thickness direction thereof near lengthwise ends thereof. End portions of round bar elements 85 are passed through the circular holes 81b and 82b. The outer diameter of the round bar elements 85 at the end portions thereof is formed smaller than the inner diameter of the circular holes 81 b and 82b by a predetermined amount. The round bar elements 85, passed through the circular holes 81b and 82b, can be displaced in an axial direction thereof relative to the circular holes 81b and 82b. The round bar elements 85 can also be displaced obliquely to the securing plates 81 and 82.

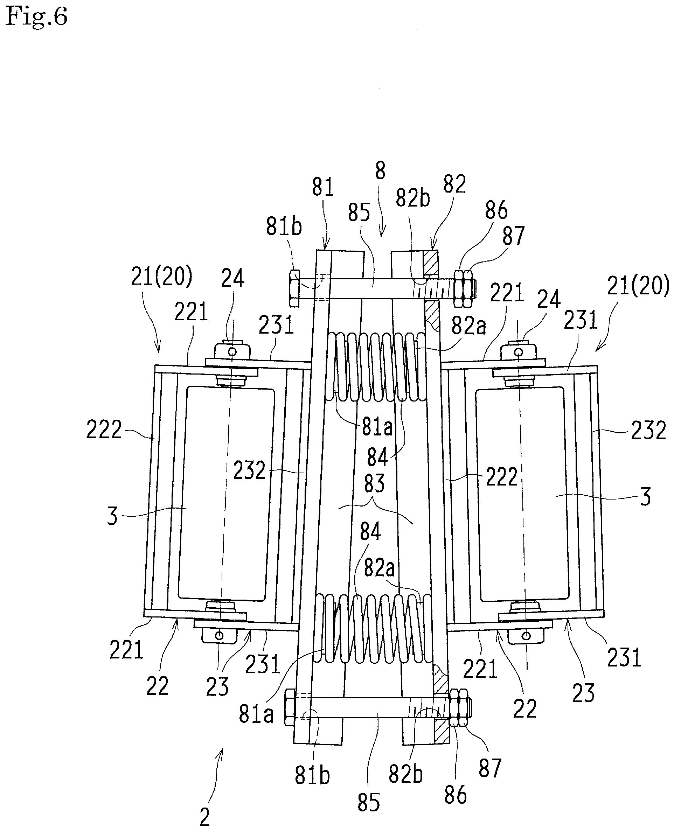

This configuration enables the two securing plates 81 and 82 to be displaced obliquely to each other as shown schematically in Fig. 6. In such a case, the adjacent linking bodies 21 can be displaced in such a manner as to be separated from each other by a distance varying along an axial direction of the linking roller 3 (axial direction of the main body 2).

The main body 2 of the winding machine 1 includes an element stretching or compressing the spring elements 84 in the spring mechanism 8 and also regulating and adjusting a stretching and compression range of the spring mechanism 8.

In the illustrated configuration, the orbiting elements 20 (linking bodies 21) coupled together by the spring mechanism 8 have the relative displacement thereof restricted by interference between the circular holes 81b and 82b provided through the securing plates 81 and 82 and the round bar elements 85 passed through these circular holes 81b and 82b.

In the spring mechanism 8, the circular holes 81b and 82b provided through the securing plates 81 and 82 and the round bar elements 85 constitute mating portions (restricting element) mating with each other so as to restrict the relative displacement of the adjacent linking bodies 21 in a predetermined range. This configuration can ensure the freedom of the relative displacement of the adjacent linking bodies 21 and at the same time can prevent the displacement from increasing excessively.

Bolts are used as the round bar elements 85. Each bolt has an external thread provided on an outer circumference thereof at one of the end portions thereof (right-hand end portion in the figure). At the same end portion, each round bar element 85 projects out of the securing plate 82 through the circular hole 82b and is screwed into a nut 86. By rotating these nuts 86, the distance separating the securing plates 81 and 82 at the one end and the distance separating the securing plates 81 and 82 at the other end can be changed respectively, which in turn renders the compression amounts of the coil springs 84 adjustable. Reference numeral 87 indicates a locknut.

The spring mechanism 8 is also provided with a compressing mechanism (compressing element) that compresses the coil springs 84 by means of the circular holes 81b and 82b, the externally threaded round bar elements 85, and the nuts 86. This compressing mechanism is capable of compressing the coil springs 84 in such a manner as to suitably adjust the outer diameter of the ring-shaped main body 2. For example, the diameter of the main body 2 can be decreased so that the main body 2 can be readily attached to, or removed from, the inner face of the existing pipe 90.

### Winding Method

The existing pipe 90 has manholes at predetermined intervals. In the example shown in Fig. 8, a manhole located upstream in terms of construction direction is designated a starting manhole M1, and a manhole located downstream is designated a destination manhole M2. These manholes M1 and M2 are used in forming the rehabilitating pipe (pipe 10) inside the existing pipe 90. As shown in the figure, a radial line of the main body 2, perpendicular to the winding direction X, is indicated by Y

First, as illustrated in Fig. 8, the drum 91, around which the profile strip 100 is overlappingly wound and which comes complete with a rotating platform, is placed on the ground near the starting manhole M1. Meanwhile, an electric power generator 92 is installed on the ground near the destination manhole M2. The winding machine 1 and the hydraulic unit 93 are moved into the existing pipe 90. In the present embodiment, the winding machine 1 is configured so that the main body 2 can be disassembled and re-assembled. The main body 2 is assembled after being moved into the existing pipe 90 through the starting manhole M1.

As the winding machine 1 is completely assembled, the winding machine 1 pulls the profile strip 100 in from the drum 91 on the ground through the starting manhole M1. This profile strip 100 is passed inside the drive unit 4 from the inner circumference side of the main body 2 of the winding machine 1 and pulled out to the outer circumference side of the main body 2. Throughout this process, the compressing mechanism compresses the coil springs 84 in the spring mechanisms 8 to decrease the outer diameter of the main body 2. Next, the main body 2 is rotated to wind a few rounds of the profile strip 100 on the outer circumference face thereof.

The coil springs 84 in the spring mechanisms 8 are then relaxed to increase the diameter of the main body 2 by spring force. The profile strip 100 wound on the outer circumference of the main body 2 is thus pressed against the inner face of the existing pipe 90. In this state, as the drive unit 4 is activated, the pinch rollers 43 pinch, continuously pull in, and feed out the profile strip 100. Meanwhile, the drive unit 4 receives a reaction force from the profile strip 100.

The drive unit 4, under the reaction force exerted by the profile strip 100 thus fed, orbits the main body 2 along the front end of the pipe 10 in a direction opposite the direction in which the profile strip 100 is fed. The side edge of the part of the profile strip 100 fed out from the drive unit 4 is joined from the inner circumference side by the fit roller 5 to the side edge of the part of the profile strip 100 already wound at the front end portion of the pipe 10. The side edges of the spirally wound profile strip 100 are moved close to each other and joined at the front end portion of the pipe 10.

As the main body 2 adds a newly pulled-in part of the profile strip 100 to the already wound part of the profile strip 100 while orbiting along the front end of the pipe 10, the pipe 10 extends toward the destination manhole M2. In this process, a reaction force exerted by the inner face of the existing pipe 90 via the profile strip 100 and the spring force exerted by the coil springs 84 in the spring mechanisms 8 are in equilibrium. When the main body 2 receives an external force, the coil springs 84 in the spring mechanisms 8 are stretched or compressed in accordance with the external force, which increases or decreases the diameter of the main body 2. This in turn increases or decreases the diameter of the pipe 10 at the front end portion thereof that is in contact with the main body 2.

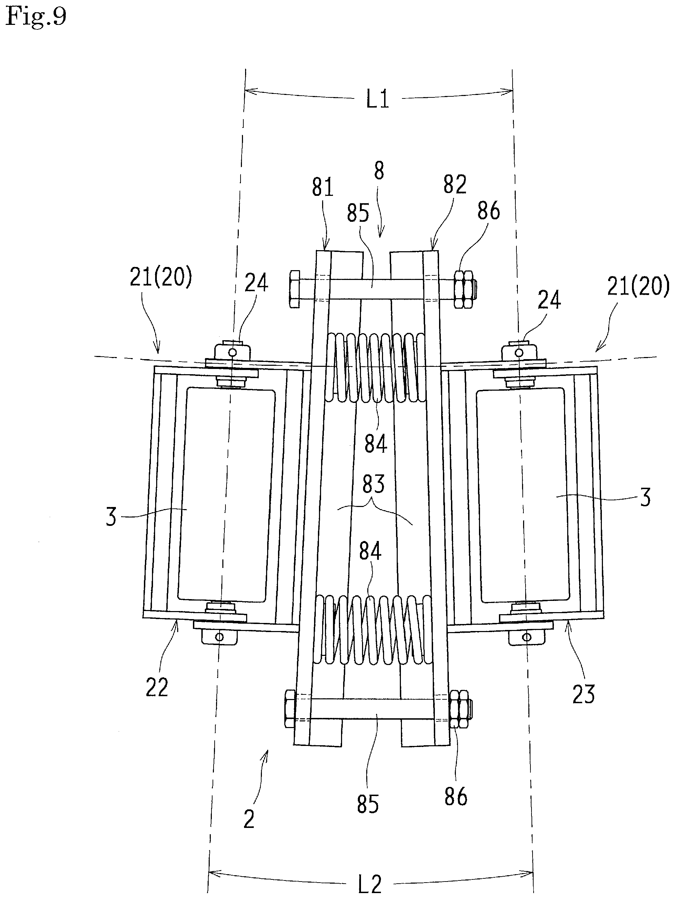

For example, as illustrated in Fig. 9, the two coil springs 84 in the spring mechanism 8, separated in the axial direction of the main body 2, exhibit different stretching and compression amounts. This configuration enables the spring mechanism 8 to be deformed so that the two securing plates 81 and 82 are separated by a distance that varies along the axial direction. The securing plates 81 and 82 are thus displaced obliquely to each other. In other words, when the spring mechanism 8 stretches or compresses (deforms) under an external force, circumferential lengths L1 and L2 change to differ from each other. Therefore, the main body 2 is deformed so as to have different circumferential lengths on the one end and the other in terms of the axial direction.

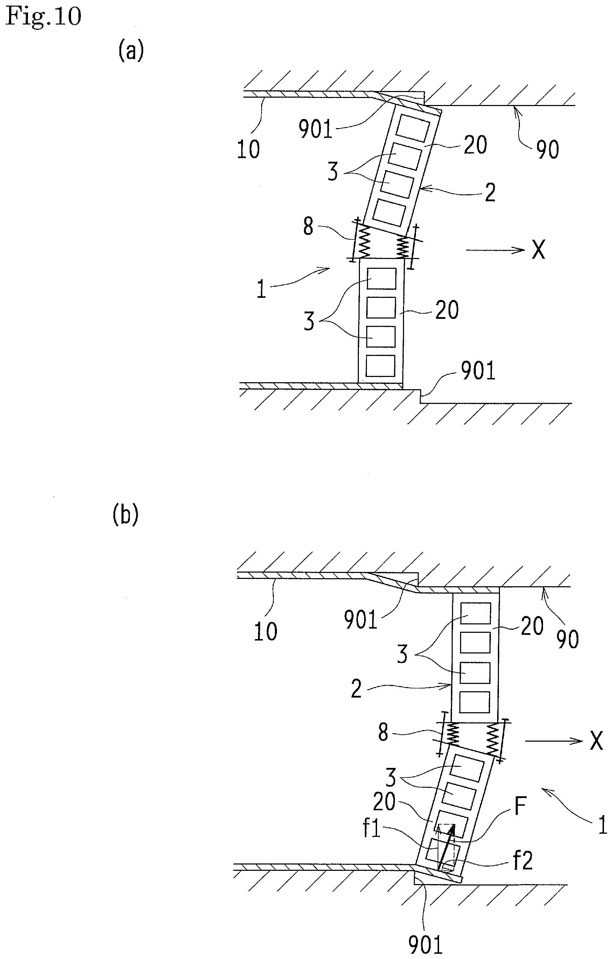

As illustrated in Fig. 10(a), if the inner face of the existing pipe 90 has a step 901, the reaction force exerted by the existing pipe 90 increases at the step 901. Under the increased reaction force, the coil springs 84 in the spring mechanisms 8 are stretched or compressed, decreasing the diameter of the main body 2. In this process, the adjacent side edges of the profile strip 100 wound at the front end portion of the pipe 10 slip relative to each other, decreasing the outer diameter of the front end portion of the pipe 10. In the main body 2, the spring mechanisms 8 separated from each other in the circumferential direction change the distances separating the orbiting elements 20 (linking bodies 21) from each other. The main body 2 as a whole looks substantially like a conical trapezoid with a forwardly decreasing diameter. The winding machine 1 can form the pipe 10 by decreasing the diameter of the outer diameter of the pipe 10, hence overcoming the step 901, without having to control the individual distances separating the orbiting elements 20 from each other.

Furthermore, as illustrated in Fig. 10(b), when the main body 2 has moved past the step 901, the diameter of the main body 2 increases in accordance with a decrease in the reaction force exerted by the existing pipe 90, and the outer diameter of the front end portion of the pipe 10 is gradually increased. In other words, the spring mechanisms 8 are deformed in accordance with the changing shape of the inner face of the existing pipe 90, again changing the distances separating the orbiting elements 20. Hence, the main body 2 as a whole looks substantially like a conical trapezoid with a backwardly decreasing diameter, without having to control the individual distances separating the orbiting elements 20 from each other. The outer diameter of the main body 2 is increased, and the outer diameter of the pipe 10 is automatically also increased.

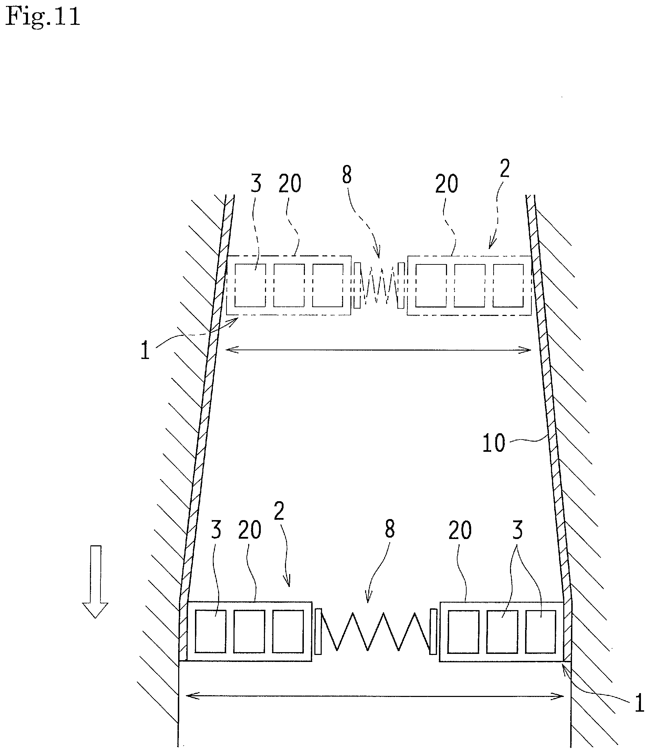

When the inner diameter of the existing pipe 90 is gradually changed, for example, when the existing pipe 90 has such a shape that the diameter thereof is gradually increased as illustrated in Fig. 11, the reaction force exerted by the existing pipe 90 is smaller on the front side of the main body 2 than the rear side thereof with respect to the winding direction indicated by an arrow. The main body 2, in forming the pipe 10, is shaped substantially like a backwardly narrowing conical trapezoid with respect to the winding direction as a result of the operation of the spring mechanisms 8. The pipe 10 is thus formed with a diameter increasing with the increasing diameter of the existing pipe 90. As the winding machine 1 progressively forms the pipe 10, the stretching amounts of the spring mechanisms 8 increase with the increasing diameter of the existing pipe 90, which in turn gradually increases the diameter of the main body 2 as a whole.

Contact area decreases between the linking roller 3 of which the shaft is supported by the main body 2 and the front end portion of the pipe 10 of which the diameter is gradually increasing (i.e., the part of the profile strip 100 wound at this front end portion). The contact between the linking roller 3 and the profile strip 100 then gradually becomes stable.

When the existing pipe 90 has such a shape that the diameter thereof is gradually decreased, the main body 2, in forming the pipe 10, is shaped substantially like a conical trapezoid with a forwardly decreasing diameter with respect to the winding direction. The pipe 10 is thus formed with a diameter decreasing with the decreasing diameter of the existing pipe 90.

When the front end portion of the pipe 10 increases the diameter thereof, the main body 2 is acted upon by a front/rear direction component of force f2 as well as an up/down direction component of force f1, due to the reaction force indicated by a thick arrow F in Fig. 9(b). This component of force f2 pushes the main body 2 forward. A small contact area between the linking roller 3 and the front end portion of the pipe 10 could cause the main body 2 to come off the existing pipe 90 and falling down forward. In contrast, as described above, the substantially conical trapezoidal shape of the main body 2 ensures a sufficiently large contact area between the linking roller 3 and the front end portion of the pipe 10. This in turn increases a frictional force, thereby preventing the main body 2 from coming off the existing pipe 90.

In this manner, the spring mechanisms 8 not only linearly deform, thereby stretching and compressing in the circumferential direction of the main body 2, but also deform with a curvature as shown in Fig. 9, thereby reshaping the outline of the main body 2 from substantially cylindrical to substantially conical trapezoidal. The main body 2 can be deformed so as to have different circumferential lengths on the one end and the other in terms of the axial direction. The existing pipe 90, when aged, could have undergone various changes on the inner face thereof and would likely have an inner diameter that is not uniform. The winding machine 1 is extremely advantageous in these situations.

The pipe 10 is gradually extended as additional parts are formed at the front end portion of the pipe 10. The pipe 10 is formed up to the destination manhole M2 in front while changing the outer diameter thereof in accordance with the shape of the inner face of the existing pipe 90.

When the front end portion of the pipe 10 has reached the destination manhole M2, in other words, when the rehabilitating pipe is completely formed, the winding machine 1 is stopped, and a back-filling material such as mortar is injected and cured in a gap between the pipe 10 and the existing pipe 90 to complete the rehabilitation of the existing pipe 90.

As described in the foregoing, the winding machine 1 can increase or decrease the diameter of the main body 2 in accordance with the shape of the inner face of the existing pipe 90, to form the pipe 10 with a suitably increased or decreased diameter. In other words, during a pipe forming work, the front end portion of the pipe 10 has the diameter thereof automatically increased or decreased in accordance with the changing shape of the inner face of the existing pipe 90. For this reason, the pipe forming work does not always need to be monitored. This eliminates the need to discontinue the work and send a worker into the existing pipe for adjustment every time the outer diameter of the main body 2 is to be changed. The spring mechanism freely stretches and compresses, which eliminates the need to run a hydraulic or other pipe for working fluid. The rehabilitating pipe can be hence formed without special control. Work efficiency improves, and unnecessary extension of construction period can be avoided.

The winding machine 1 has the following additional advantages. The adjacent linking bodies 21 with the interposed spring mechanism 8 can be displaced obliquely to each other, which allows the outer diameter of the ring-shaped main body 2 to vary along the axial direction. The outline of this main body 2 can therefore assume a conical trapezoidal shape having a diameter increasing or decreasing in the winding direction. Therefore, when the front end portion of the pipe 10 increases or decreases the diameter thereof in accordance with the changing shape of the inner face of the existing pipe 90, the wound profile strip 100 is in stable contact with the linking roller 3.

### Embodiment 2

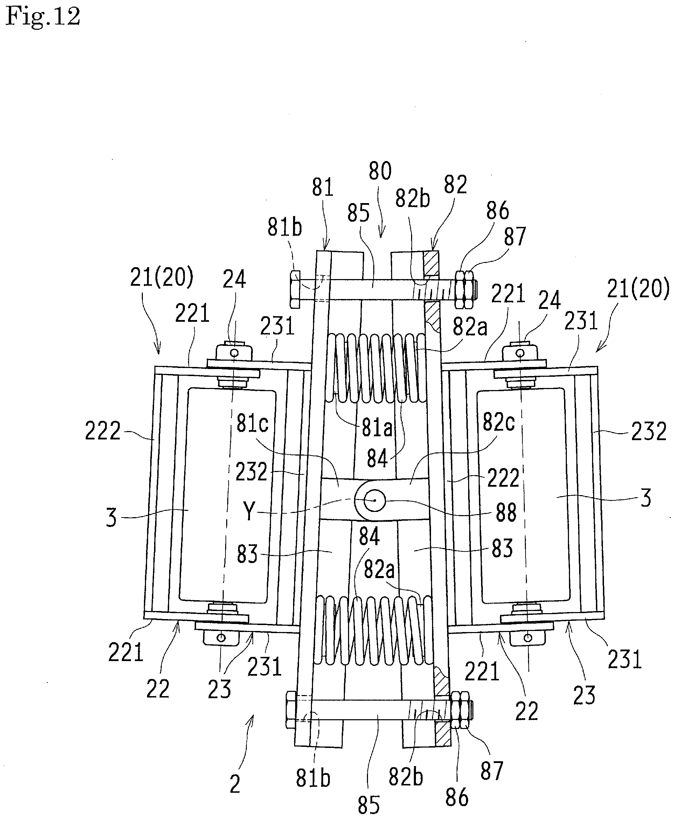

Fig. 12 shows a spring mechanism 80 for a winding machine 1 in accordance with Embodiment 2. The spring mechanism 80 includes a pair of securing plates 81 and 82 rotatably coupled around a radial line Y of a ring-shaped main body 2. The spring mechanism 80 is otherwise configured in the same manner as in Embodiment 1. The same elements are indicated by the same reference numerals and description thereof is omitted.

The spring mechanism 80 includes: the paired securing plates 81 and 82; and two coil springs 84 and two round bar elements 85 coupling the securing plates 81 and 82. The round bar elements 85 have end portions thereof respectively passed through circular holes 81b and 82b provided through the securing plates 81 and 82. Nuts 86 are screwed onto end portions of the round bar elements 85, each of which is composed of a bolt, in order to form a compressing mechanism (compressing element) that adjusts the compression amounts of the coil springs 84.

The spring mechanism 80, configured as described here, includes a rotatably coupling portion that in turn includes a pair of arms 81c and 82c on the securing plates 81 and 82 and a pin 88. The securing plates 81 and 82 are provided with the arms 81c and 82c respectively so that the arms 81c and 82c project from lengthwise middle portions of the securing plates 81 and 82 toward the oppositely located securing plates 82 and 81. These arms 81c and 82c are rotatably coupled by the pin 88.

This configuration allows the paired securing plates 81 and 82 to be rotated (displaced) relative to each other around the pin 88 as illustrated in Fig. 12. Adjacent linking bodies 21 have trajectories of displacement thereof specified relative to each other. The linking bodies 21 coupled by the spring mechanism 80 smoothly rotate around the radial line Y of the ring-shaped main body 2, allowing the main body 2 to readily assume a conical trapezoidal shape. Therefore, the winding machine 1 can properly react to abrupt changes in an inner diameter of an existing pipe 90.

### Embodiment 3

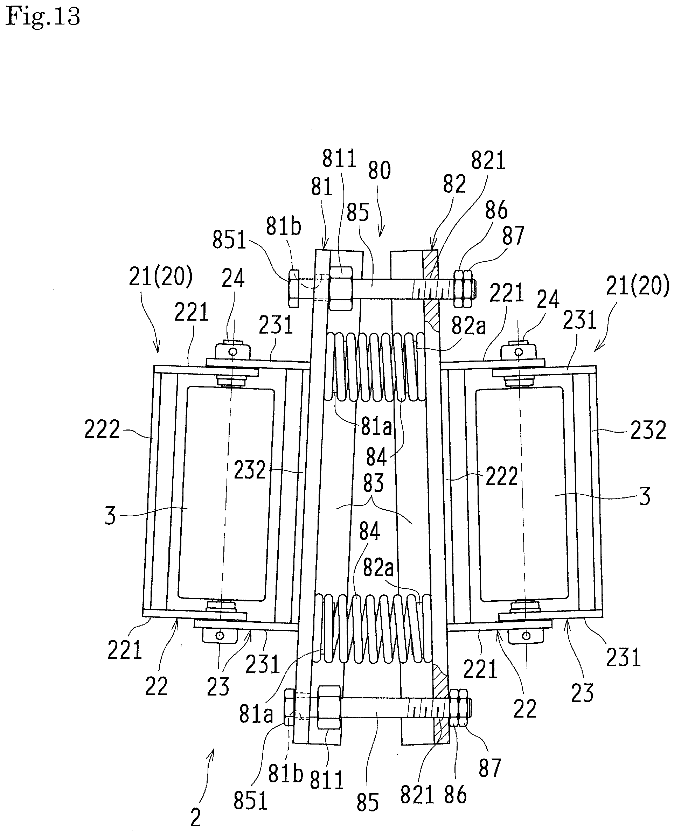

Fig. 13 shows a spring mechanism 80 for a winding machine 1 in accordance with Embodiment 3. The winding machine 1 in accordance with this configuration also includes an element stretching or compressing spring elements 84 in the spring mechanism 80 and regulating a stretching and compression range of the spring mechanism 80.

In the example shown in Fig. 13, the spring mechanism 80 includes a stretching element stretching the spring elements 84. The spring mechanism 80 is otherwise configured in the same manner as in Embodiment 1. The same elements are indicated by the same reference numerals and description thereof is omitted.

The spring mechanism 80 includes: a pair of securing plates 81 and 82; and two coil springs 84 and two round bar elements 85 coupling the securing plates 81 and 82. For example, a nut 811 is screwed onto each round bar element 85, which extends through one of the securing plates 81 and 82 (securing plate 81), so that the nut 811 can act as the stretching element ensuring a stretching amount of the spring element 84. The nuts 811, as the stretching element, are respectively screwed onto the two round bar elements 85 internally to the securing plate 81. Hence, a bolt head 851 of the round bar element 85 and the nut 811 are located on different faces of the securing plate 81, separated by a distance. The round bar elements 85 are passed through circular holes 81b provided through the securing plate 81.

The other securing plate 82 has, as further stretching elements, tap holes 821 formed through a thickness direction of the securing plate 82, in place of the aforementioned circular holes 82b corresponding to the circular holes 81b. The round bar elements 85 have shaft portions thereof being screwed into the tap holes 821 provided through the securing plate 82.

The securing plate 82 and the round bar elements 85 are attached in fixed positions by the round bar elements 85 being screwed into the tap holes 821 provided through the securing plate 82. In addition, the nuts 811 are screwed onto the round bar elements 85 internally to the securing plate 81. This configuration regulates the range of movement of the securing plate 81 relative to the securing plate 82 to a fixed range between the bolt heads 851 of the round bar elements 85 and the nuts 811. The spring elements 84 stretch and compress within the fixed range between the bolt heads 851 of the round bar elements 85 and the nuts 811 screwed onto the round bar elements 85.

Stretching and compression amounts of the spring elements 84 are changed by an external force exerted on the winding machine 1. For example, to maintain a circumferential length of a main body 2 at no less than a certain length, the stretching element(s) can be used to regulate the stretching and compression amounts of the spring elements 84 in the spring mechanism 80 to the fixed range. The spring elements 84 can be stretched by tightly screwing the nuts 811 on the round bar elements 85 to reduce distances separating the nuts 811 and the bolt heads 851. In contrast, by less tightly screwing the nuts 811 on the round bar elements 85 to increase the distances separating the nuts 811 and the bolt heads 851, the stretching of the spring elements 84 can be relieved to a natural length or a stretching amount close to the natural length.

In this manner, the spring mechanism 80 including the stretching element(s) enables fixed amounts of preliminary stretching or compression of the spring elements 84. This in turn renders the spring mechanism 80 size-adjustable, thereby enabling control of the circumferential length of the main body 2.

The round bar elements 85 passed through the circular holes 81b provided through the securing plate 81 can be displaced obliquely to the circular holes 81b. The winding machine 1 can properly react to curvature-involving deformation of the spring mechanism 80. This configuration of the spring mechanism 80 may be applied to all the spring mechanisms 8 (80) in the main body 2 or applied selectively to any of the spring mechanisms 8 (80).

### Embodiment 4

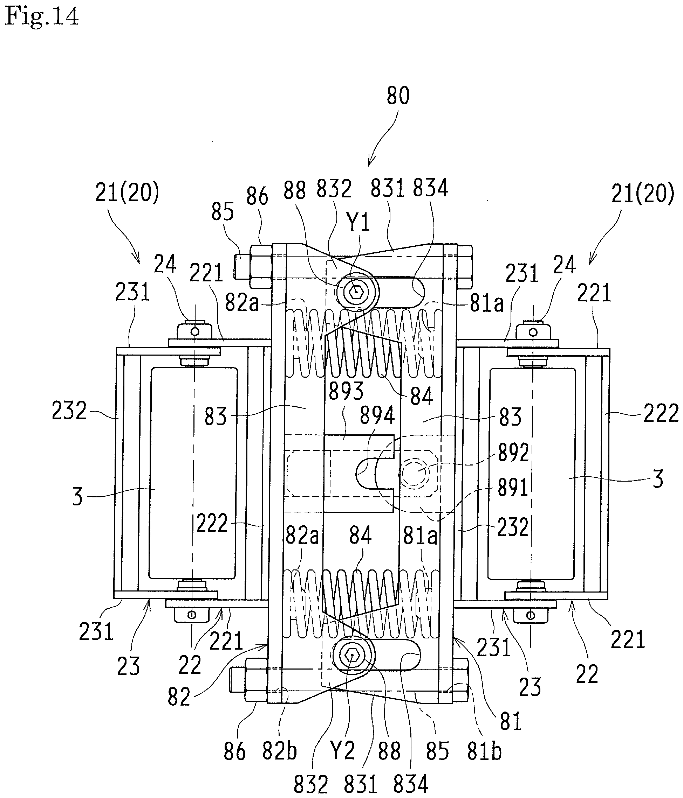

Fig. 14 shows a spring mechanism 80 for a winding machine 1 in accordance with Embodiment 4 as it is viewed from an outer circumference side of a main body 2. The spring mechanism 80 includes mating portions, a compressing mechanism, and a rotatably coupling portion as in Embodiment 2. Among these elements, the rotatably coupling portion couples two securing plates 81 and 82 so that the securing plates 81 and 82 can rotate around a radial line Y1 or Y2 of a ring-shaped main body 2. The spring mechanism 80 is otherwise configured in the same manner as in Embodiment 1. The same elements are indicated by the same reference numerals and description thereof is omitted.

The spring mechanism 80 includes the paired securing plates 81 and 82; and two coil springs 84 and two round bar elements 85 coupling the securing plates 81 and 82. The round bar elements 85 have end portions thereof respectively passed through circular holes 81b and 82b provided through the securing plates 81 and 82. Nuts 86 are screwed onto end portions of the round bar elements 85, each of which is composed of a bolt, in order to form the mating portions that restrict distances between the securing plates 81 and 82 and the compressing mechanism (compressing element) that compresses the coil springs 84.

Each securing plate 81 (82) has linking plate portions 831 (832) at respective lengthwise end portions thereof, the linking plate portions 831 (832) projecting toward the oppositely located securing plate 82 (81). These linking plate portions 831 and 832 are provided on extension plates 83. Each linking plate portion 831 has a pin hole through which a pin 88 is passed. Each linking plate portion 832 has an elongate hole 834 extending in a circumferential direction in which the pin 88 can be slid. The linking plate portions 831 and 832 are placed over each other and coupled rotatably around the radial line Y1 or Y2 by the pin 88 running through both the linking plate portions 831 and 832.

Furthermore, second mating portions (restricting element) that can mate each other are provided in the lengthwise middle portions of the securing plates 81 and 82. The securing plate 81 supports a radially extending mating pin 892 between the extension plate 83 and a supporting plate 891 located opposite this extension plate 83. The other securing plate 82 is provided with a mating element 893 projecting toward the oppositely located securing plate 81. The mating element 893 has a concave portion 894 that mates with the mating pin 892. These mating pin 892 and mating element 893 constitute the second mating portions. When the coil springs 84 are compressed, the mating pin 892 mates with the concave portion 894 to restrict a compression range of the spring mechanism 8, thereby regulating the proximity distance between linking bodies 21 to a predetermined range.

This configuration enables the paired securing plates 81 and 82 to be rotated (displaced) relative to each other around any one of the pins 88. The adjacent linking bodies 21 have trajectories of displacement thereof being delimited relative to each other by both the area of the elongate hole 834 and a mating range of the second mating portions. The linking bodies 21 coupled by the spring mechanism 80 smoothly rotate around the radial line Y1 or Y2 of the ring-shaped main body 2, allowing the main body 2 to readily assume a conical trapezoidal shape. Therefore, the winding machine 1 can properly react to abrupt changes in an inner diameter of an existing pipe 90.

### Other Embodiments

All the above-described embodiments are mere examples, and none of the embodiments limits, for example, the configuration or application of the present invention. For example, the spring mechanism 80 in Embodiment 2 is not necessarily provided with the restricting element including the circular holes 81b and 82b provided through the securing plates 81 and 82 and the round bar elements 85. One of the round bar elements 85 may be used singly as the restricting element. In addition, the restricting element, the compressing element, and the stretching element(s) are by no means necessarily disposed in the spring mechanisms 8 and 80 and may be provided in any location in the main body 2. For example, a linking element 27, as a restricting and compressing element, may be arranged and disposed between adjacent linking bodies 21 as described in the following.

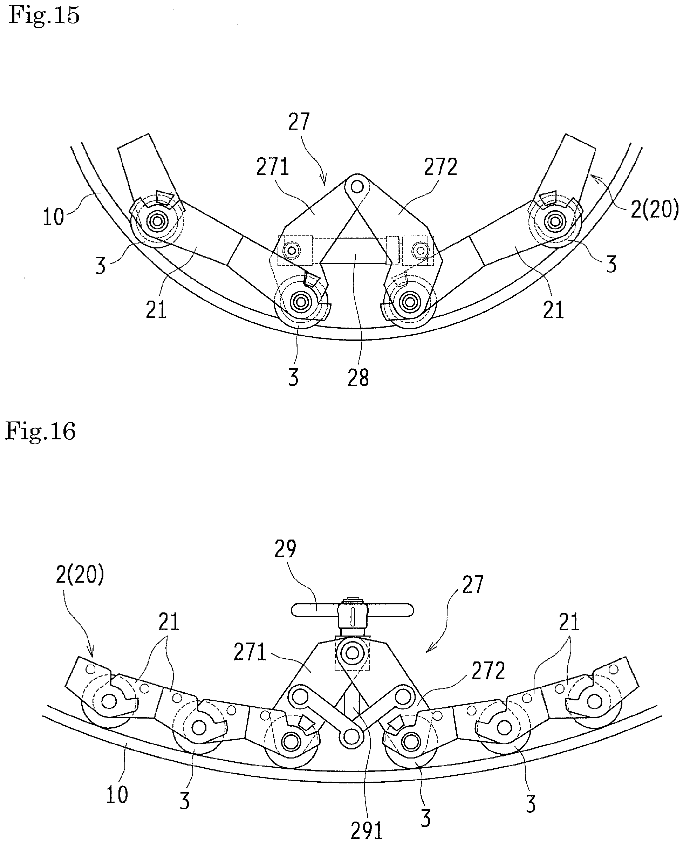

The linking element 27 shown in Figs. 15 and 16 includes a bent pair of linking arms 271 and 272 coupled to respective linking bodies 21. These linking arms 271 and 272 are coupled to the linking bodies 21 in a state where the linking arms 271 and 272 are bent toward an inner circumference side in the main body 2.

Between the linking arms 271 and 272 shown in Fig. 15 is there provided an actuator (hydraulic cylinder) 28 that modifies the bent shape of the linking arms 271 and 272. The linking element 27 has a bending angle that can be adjusted by actuating (hence stretching and compressing) this actuator 28, so that the linking element 27 can be stretched or compressed in a circumferential direction. Meanwhile, between the linking arms 271 and 272 shown in Fig. 16 is there provided a handle 55 that adjusts the bent shape of the linking arms 271 and 272. The handle 29 is provided with an externally threaded rotation shaft 291 extending therefrom. The rotation shaft 291 has a tip end portion thereof being coupled via links to the linking arms 271 and 272. The bending angle of the linking element 27 can be adjusted by rotating the handle 29 to actuate (move) the rotation shaft 291 in an axial direction thereof. The spring mechanism 8 can have a stretching amount thereof restricted or compressed, and the main body 2 can have a diameter thereof increased or decreased, by adjusting the bending angle of this linking element 27.

The spring mechanism 8 (80) may include only one or at least three of the coil springs 84. The coil spring 84 may be replaced by a plate spring or other spring element. The spring mechanism 8 is not necessarily provided in 3 locations in the main body 2 as illustrated in Fig. 1. Alternatively, the spring mechanism 8 may be provided in only 1 location, 2 locations, or furthermore, 4 or more locations in the main body 2. The spring mechanisms 8 and 80 can each individually stretch and compress and may exhibit individually different stretching and compression amounts. Fig. 16 is a schematic illustration of the shape of a winding machine 1 including a plurality of the spring mechanisms 8 (or 80). As illustrated in Fig. 16, the spring mechanisms 8 (80) deform in accordance with the shape of an existing pipe; some of the spring mechanisms 8 (80) are compressingly deformed, and some of the spring mechanisms 8 (80) are stretchingly deformed. This configuration allows the main body 2 of the winding machine 1 to be deformed so as to have an elliptical outline. The winding machine 1 therefore becomes capable of forming the pipe 10 with an elliptical cross-section.

The spring mechanisms 8 (80) given as an example in each embodiment are not necessarily of a single type. The winding machine 1 may include differently configured spring mechanisms.

The orbiting elements 20 do not necessarily include the chain of the linking bodies 21. Alternatively, the orbiting elements 20 may be constructed of, for example, a hard frame material with a curved outline. The profile strip 100 is given for illustrative purposes only, and various other profile strips may be used in the winding method of the present invention.

The present invention may be implemented in various forms without departing from its spirit and main features. Therefore, the aforementioned examples are for illustrative purposes only in every respect and should not be subjected to any restrictive interpretations. The scope of the present invention is defined only by the claims and never bound by the specification. Those modifications and variations that may lead to equivalents of claimed elements are all included within the scope of the invention. The present application hereby claims priority on Patent Application No. 2014-093484, filed in Japan on April 30, 2014, the entire contents of which are hereby incorporated herein by reference.

### Industrial Applicability

The present invention can increase the efficiency of a pipe forming work in which a profile strip is spirally wound on the inner face of an existing pipe to form a pipe-like body as a rehabilitating pipe. The present invention is therefore useful.

### Reference Signs List

- 1: Winding Machine
- 2: Main Body
- 20: Orbiting Element
- 3: Linking Roller
- 4: Drive Unit (Drive Mechanism)
- 5: Fit Roller (Joining Mechanism)
- 8, 80: Spring Mechanism
- 81, 82: Securing Plate
- 81 b, 82b: Circular Hole
- 81c, 82c: Arm (Rotatably Coupling Portion)
- 811: Nut
- 821: Tap Hole
- 84: Coil Spring (Spring Element)
- 85: Round Bar Element
- 86: Nut
- 88: Pin (Rotatably Coupling Portion)
- 100: Profile Strip
- 10: Pipe
- 90: Existing Pipe

## Claims

1. A winding machine spirally winding an elongate profile strip to form a pipe, the winding machine comprising a main body, the main body comprising:
a plurality of orbiting elements configured to orbit while holding the profile strip in contact;
at least one spring mechanism configured to couple the plurality of orbiting elements and to be stretched and compressed between the plurality of orbiting elements; and
a joining mechanism supported by the plurality of orbiting elements, the joining mechanism being configured to push a fit portion of the profile strip against a preceding fit portion of the profile strip from inside a spiral to join the two fit portions,
the main body being formed in a ring-like shape,
the at least one spring mechanism, including at least one spring element, being configured to be capable of being stretched and compressed so that the plurality of orbiting elements are mutually separated by a distance varying along an axial direction of the main body, and
the winding machine, when the at least one spring mechanism is stretched or compressed under an external force, forming the pipe while the main body is being deformed in such a manner as to have different circumferential lengths on one end and another in terms of the axial direction.

2. A winding machine spirally winding an elongate profile strip to form a pipe, the winding machine comprising a main body, the main body comprising:
a plurality of orbiting elements configured to orbit while holding the profile strip in contact;
at least one spring mechanism configured to couple the plurality of orbiting elements and to be stretched and compressed between the plurality of orbiting elements; and
a joining mechanism supported by the plurality of orbiting elements, the joining mechanism being configured to push a fit portion of the profile strip against a preceding fit portion of the profile strip from inside a spiral to join the two fit portions,
the main body being formed in a ring-like shape,
the at least one spring mechanism, including at least one spring element, being configured to be capable of being stretched and compressed so that the plurality of orbiting elements are moved away from each other or closer to each other in a circumferential direction of the main body,
the main body further comprising an element configured to stretch or compress the at least one spring element in the at least one spring mechanism to regulate a stretching and compression range of the at least one spring mechanism, and
the winding machine, when the at least one spring mechanism is stretched or compressed under an external force, forming the pipe while the main body is changing an outline thereof.

3. The winding machine according to claim 1 or 2, wherein the at least one spring mechanism comprises at least two of the at least one spring element disposed along the axial direction.

4. The winding machine according to claim 1 or 2, wherein the at least one spring mechanism includes a rotatably coupling portion configured to couple an adjacent pair of the plurality of orbiting elements rotatably around a radial line of the main body.

5. The winding machine according to claim 1 or 2, wherein the at least one spring mechanism includes a restricting element configured to restrict a distance separating an adjacent pair of the plurality of orbiting elements to a predetermined range.

6. The winding machine according to claim 1 or 2, wherein the at least one spring mechanism includes a compressing element configured to compress the at least one spring element.

7. The winding machine according to claim 1 or 2, wherein the at least one spring mechanism includes a stretching element configured to stretch the at least one spring element.

8. The winding machine according to claim 1 or 2, wherein the at least one spring mechanism comprises at least three spring mechanisms disposed at intervals along a circumferential direction of the main body.

9. The winding machine according to claim 1 or 2, wherein the main body further comprises a drive mechanism configured to feed the profile strip from an inner circumference side of the main body so as to drive the main body in a direction opposite to a direction in which the profile strip is fed, by a reaction force exerted by the profile strip thus fed.

10. A winding method of forming a pipe using a winding machine,
the winding machine having a ring-like shape and comprising at least: a plurality of orbiting elements; a spring mechanism configured to couple the plurality of orbiting elements at a distance from each other; and a joining mechanism for a profile strip,
the method comprising:
installing, in an existing pipe, the winding machine having an outer diameter thereof increased or decreased by the spring mechanism;
feeding the profile strip, which is elongate, to the joining mechanism from an inner circumference side of the winding machine;
transferring the profile strip thus fed, to an outer circumference of the winding machine and spirally orbiting the profile strip while pushing the profile strip radially outward, so as to form a pipe of the profile strip; and
while forming this pipe, increasing or decreasing the outer diameter of the winding machine using the spring mechanism in accordance with an internal shape of the existing pipe so as to increase or decrease a diameter of the pipe being formed.
